# EUROPEAN PATENT SPECIFICATION

(11) **EP 2 917 703 B1**
(45) Date of publication and mention of the grant of the patent: **01.01.2020**
(21) Application number: 12794665.5
(22) Date of filing: 12.11.2012
(51) Int. Cl.: G01F 23/26, G01F 23/00, G01F 11/00

(54) **SYSTEM AND METHOD FOR MONITORING PRESENCE OR ABSENCE OF A LIQUID PRODUCT IN A CAVITY**
SYSTEM UND VERFAHREN ZUR ÜBERWACHUNG DER ANWESENHEIT ODER ABWESENHEIT EINES FLÜSSIGEN PRODUKTS IN EINEM HOHLRAUM
SYSTÈME ET PROCÉDÉ DE SURVEILLANCE DE LA PRÉSENCE OU L'ABSENCE D'UN PRODUIT LIQUIDE DANS UNE CAVITÉ

(43) Date of publication of application: 16.09.2015
(73) Proprietor: Ecolab USA Inc., St. Paul, MN 55102 (US)
(72) Inventor: SAUER, Wolfgang, 83483 Bischofswiesen (DE); ZETTLITZER, Günter, 83346 Bergen (DE); SCHWEBLE, Martin, 83313 Siegsdorf (DE); ALBRECHT, Rudolf, 83043 Bad Aibling (DE)
(74) Representative: Godemeyer Blum Lenze Patentanwälte Partnerschaft mbB - werkpatent
(86) International application number: PCT/EP2012/072399
(87) International publication number: WO 2014/071999

(56) References cited:
- US-A- 4 196 625
- US-A- 5 152 424
- US-A- 5 757 197

## Description

This invention relates to a system and a method for monitoring presence or absence of a liquid product in a cavity.

In many applications a liquid product is transported from one location to another location where the liquid product is used, for example a liquid product is transported via pump from a container to an apparatus which uses the liquid product. In many applications it is important to indicate that the liquid product is either present or absent in the source container or is flowing or has stopped flowing through a tubing connecting the supply location with the destination location.

An example of a situation in which it is important is an out of product sensor. When available liquid product has been exhausted, the liquid product will no longer be present inside the tubing connecting the supply location with the destination location. This situation would apply to any application in which liquid product is being pumped from a supply, such as a container, through a tube. When the container empties, air is suck through the tube and the sensor can be triggered, indicating through a visual or audible alarm that the product has been exhausted. A sensor can indicate when a particular product, which is being supplied to a working environment, has run out of stock. A good example of such a situation is where a rinse aid agent is being added to the water of a commercial washer. Another example is where a liquid detergent is being added to the water of a commercial washer.

Situations involving the need for out of product sensors are water care situations where softeners and/or conditioners are being added to a supply of water.

In many applications it might not be noticed right away that the liquid product is not present. Only after a period of time when performance, e. g. the effectiveness of washing and rinsing, has already begun to suffer, might the out of product condition be noticed. By that time, the out of product condition may well have already begun affecting the quality of the work product, e. g. cleanliness and/or appearance of cleaned dishware and cookware.

Tubing or other conduits typically connect supply and destination locations when it is necessary to transport a liquid product from one location to another. Typically a pump, e. g. a peristaltic pump, is located between the supply location and the destination location, along the tubing connecting the locations. However, a pump is not the only means available to move liquid product from one location to another. For example, in certain circumstances, an aspirator may be used or gravity feed may be used. These means for transporting the liquid product from a supply to a destination location cannot sense an out of product condition.

To monitor the presence or absence of a liquid product out of product sensors using an ordinary float have been developed. A float can operate as a liquid level sensor in a supply tank or source container. This apparatus works similar to the common gasoline gauge in an automobile indicating the degree of fullness of the gasoline tank and, thus, indicating when the product, in this case gasoline, is about to become out of product. While such float sensors are very common, they have significant disadvantages. First, float sensors are relatively complicated and, hence, relatively costly. Second, the float necessarily actually contacts the fluid being sensed because it floats in the liquid. Thus, the float assembly is subject to contamination by the fluid which may affect the float's operational effectiveness. Third, the accuracy of an out of product sensor using a float is limited, since an out of product signal is generated once the float contacts the bottom of the source container. However, in this case there is still some liquid product remaining in the source container.

An example of a float sensor is disclosed in US-Patent No. 5,986,554, which describes an alarm mechanism signaling the absence of a liquid product from a source or an aqueous liquid. The alarm mechanism comprises an alarm body having an inlet port and an outlet port. The inlet port is in liquid communication with a use locus. The alarm mechanism additionally comprises a float chamber placed in liquid parallel communication with the inlet port and the outlet port. The float chamber contains a float operably connected to an alarm. The float, when the chamber is filled with fluid, disables the switch from generating a signal. The float, as the chamber is emptied of liquid, reaches a position and is detected energizing the switch to send a "low or empty product" signal. As liquid in the source of liquid is depleted and is no longer available for passage through the body, the body becomes emptied of liquid as the source of pressure removes liquid form the body and particularly from the chamber causing the float to reach a position generating a signal.

Another traditional out of product sensor is simply a section of clear tubing. A section of clear tubing can provide a passive out of product sensor by providing a visual indication of whether or not a liquid product is present within the tubing. While simple, this passive sensor also suffers from disadvantages. First, the tubing and, hence, the flow of liquid product must be routed to a location at which a user of the liquid product can observe the clear tubing in order to inspect the clear section of tubing for product presence. Second, in many circumstances, it is difficult to easily observe whether or not the product is actually present in the tubing. And third, the clear section of tubing is not an effective alarm. It does not draw attention to itself when an alarm condition occurs. This, again, may not result in the out of product condition, being noticed as soon as product outage occurs and, hence, detrimental performance occurs.

A similar sensor consisting of a widened section of clear tubing can be used to provide a visual indication of whether or not the liquid product is floating within the tubing. Typically, the sensor is designed such that air is trapped in the widened section of tubing. When liquid product is flowing, movement of the liquid product may be determined by observing movement of the air trapped in the clear widened section of clear tubing. However, when liquid product is not flowing in the tubing, no movement of the liquid product is visible in the air in the clear tubing. This type of sensor suffers from the same disadvantages of the previous sensor.

Capacitive sensors have been utilized for tank level sensors. A capacitive sensor would be mounted to the outside of a none conductive tank such that it could sense the presence or absence of a liquid product inside the tank at the particular level at which the capacitive sensor is located. Positioned at the proper level outside of the tank, such capacitive sensors can adequately determine whether the tank contains that level of product or not. However, the capacitive tank sensor cannot determine whether or not the fluid product is actually flowing towards the destination. Capacitive sensors have also being used on tubing to monitor the presence or absence of a liquid material in the tubing. However, substantial problems exist which must be solved before these systems can work properly. Differing sizes of tubing, with differing tubing materials and with differing characteristics of liquid product all make it difficult for these systems to work properly. First, such a system must ensure that there is enough liquid product in the tubing at the sensing location, when, in fact, the liquid product actually exist, e. g. is flowing, in the tubing at the sensing location. Second, such a system must ensure, that the liquid product is substantially evacuated from the liquid tubing at the sensing location, when the liquid product isn't flowing through the tubing or doesn't exist in the source container.

Liquid products in combination with certain tubing materials have lower contact angles which tend to coat the inside surface (wall) of the tubing. Coating or wetting the inside surface of the tubing may trick capacitive sensors into sensing the presence of a liquid product even those liquid product is not being transported through the tubing. This, residual liquid product, coated to the inside wall of the tubing, can still be sensed by the capacitive sensor resulting in an erroneous reading and a failure detect an out of product condition.

Further, improperly sized tubing consisting of the wrong material may result in liquid product floating through the tubing at a rate such that there is not enough liquid product in the tubing at the sensing location at a given point in the time for a capacitive sensor to properly sense the presence of the liquid product. This can result if too much air or too many air bubbles, is drawn into the tubing. The result can be an erroneous out of product warning when liquid product is actually present in the supply container and flowing through the tubing.

To overcome these problems US 6,885,306 B2 discloses a monitor for monitoring presence or absence of a liquid product in a system for pumping said liquid product from a supply through a pump and associated tubing to a destination, comprising:
a capacitive sensor coupled to the outside of said tubing at a sensing location between said pump and said destination, said capacitive sensor being responsive to the presence or absence of said liquid product in said tubing;
said tubing having an inside surface at said sensing location and having a volume within said tubing at said sensing location, said tubing being selected from a material and having an inside diameter at said sensing location selected such said:
   said material of said inside surface of said tubing and said inside diameter of said tubing being large enough such that said liquid product is substantially evacuated from said tubing at said sensing location when said liquid product is substantially absent from said tubing preceding said sensing location, and
   said inside diameter of said tubing being small enough and said material of said inside surface being selected such that air remaining in said tubing is substantially absent from said tubing at said sensing location when said liquid product is substantially present in said supply;
said inside surface of said tubing in said liquid product being selected such that said liquid product forms a contact angle with said inside surface of said tubing at said sensing location of less than 70 degrees.

The system according to US 6,885,306 B2 is specifically designed for one special liquid product, especially the tubing is configured with respect to one specific liquid product. For example, the volume of the tubing and the material of the tubing are selected such that the specific liquid product forms a contact angle with the inside surface of the tubing at the sensing location of less than 70 degrees.

The system according to US 4,196,625 monitors a fluid supply using an asymmetric electrode geometry.

It is an object of the invention to provide a system for monitoring presence or absence of a liquid product in a cavity irrespective of the kind of liquid product and the characteristics of the tubing, like sizing or used materials.

According to the invention the problem is solved by a system for monitoring presence or absence of a liquid product in a cavity, wherein said liquid product preferably is a rinse aid agent, a detergent, a softener and/or a conditioner and wherein said cavity preferably is a tubing, further preferred a suction lance; said system comprises:
at least a first electrode, a second electrode and a third electrode;
a control unit connected to said electrodes; and
means for measuring the complex conductivity between said first electrode and said second electrode and comparing the result to the measured complex conductivity between said third electrode and said second electrode;
wherein said cavity is defined by a wall with an inner wall and an outer wall;
wherein said first electrode, said second electrode and said third electrode are located on the outer wall or on the inner wall of said cavity;
wherein the distance between said first electrode and said second electrode along the inner wall of said cavity equals the distance between said third electrode and said second electrode along the inner wall of said cavity; and
the distance between said first electrode and said second electrode through said cavity is shorter than said distance between said third electrode and said second electrode through said cavity;
wherein according to the invention said first electrode, said second electrode and/or said third electrode are radially or radially and longitudinally spaced from each other.

In case no liquid product is located inside said cavity or only the inner wall of said cavity is covered with a liquid product the conductivity and permittivity, in the following referred to as complex conductivity, between said first electrode and said second electrode mainly depends on the distance between said first electrode and said second electrode along the inner wall of said cavity. Accordingly the complex conductivity between said third electrode and said second electrode mainly depends on the distance between said third electrode and said second electrode along the inner wall of said cavity. In case the surface area of said first electrode equals to the surface area of said third electrode the complex conductivity between said first electrode and said second electrode approximately equals the complex conductivity between said third electrode and said second electrode.

In case liquid product is flowing through said cavity the complex conductivity and permittivity between said first electrode and said second electrode mainly depends on the distance between said first electrode and said second electrode through said cavity. Accordingly the complex conductivity between said third electrode and said second electrode mainly depend on the distance between said third electrode and said second electrode through said cavity in case a liquid product is located inside said cavity.

Thus, the system according to the invention can monitor the presence or absence of a liquid product in a cavity by measuring the complex conductivity between said first electrode and said second electrode and comparing the result to the measured complex conductivity between said third electrode and said second electrode. In case no liquid product is located inside said cavity or only the inner wall of said cavity is covered with the liquid product both complex conductivities have approximately the same value. In case liquid product is located inside said cavity the complex conductivity between said first electrode and said second electrode is significantly different from the complex conductivity between said third electrode and said second electrode. Thus, the system according to the invention can monitor the presence or absence of a liquid product in a cavity irrespective of the kind of liquid product. The obtained result does not depend on the conductivity and the permittivity of the liquid product in case the distance between said first electrode and said second electrode along the inner wall of said cavity equals approximately the distance between said third electrode and said second electrode along the inner wall of said cavity; and in that the distance between said first electrode and said second electrode through said cavity is shorter than said distance between said third electrode and said second electrode through said cavity.

According to a variant of the invention said control unit is built to provide a first excitation signal to said first electrode and inversely phased second excitation signal to said third electrode. If no liquid product is inside said cavity or only the inner wall of said cavity is covered with said liquid product the complex conductivity between said third electrode and said second electrode and the complex conductivity between said first electrode and said second electrode, cancel out each other.

In a further variant of the invention said control unit is built to measure an output signal at said second electrode, wherein said output signal at said second electrode is a superposition of said first excitation signal with said second excitation signal. Using an inversely phased second excitation signal results in an output signal about zero if no liquid product is inside said cavity or only the inner wall of said cavity is covered with said liquid product. When said liquid product is inside said cavity the complex conductivity between said first electrode and said second electrode is different from the complex conductivity between said third electrode and said second electrode and hence, the measured output at said second electrode is significantly different from about zero.

In an advantageous variant of the invention the system for monitoring presence or absence of a liquid in a cavity is integrated in a supply, wherein said liquid product in delivered from that supply to a destination. Thus, a customer can directly connect the supply to the destination without an additional efford for connection a separate system for monitoring presence or absence of a liquid product in a cavity. Preferably the supply comprises a connector located in an outside wall, preferably the top outside wall of the supply and the system for monitoring presence or absence of a liquid product in cavity is at least partially integrated in the connector.

According to a further variant of the invention said first electrode, said second electrode and/or said third electrode at least partially consists of copper.

According to the present invention said first electrode, said second electrode and/or said third electrode are radially or radially and longitudinally spaced from each other. The radially or radially and longitudinally spacing between said first electrode, said second electrode and said third electrode is dimensioned in such a way that the distance between said first electrode and said second electrode along the inner wall of the cavity is equal to approximately the distance between said third electrode and said second electrode along the inner wall of said cavity and that the distance between said first electrode and said second electrode through said cavity is shorter than the distance between said third electrode and said second electrode through said cavity.

In accordance with a further variant of the invention said cavity is a tubing, preferably a suction lance. Said tubing or said suction lance can be integrated into a supply, from which said liquid product is delivered to a destination.

Pursuant to a further variant of the invention said liquid product is a rinse aid agent, a detergent, a softener and/or a conditioner.

In a further variant of the invention said supply is a vessel, a container, a barrel, a keg, a drum, a storage-jar or another kind of hollow vessel for storing a liquid product.

For safety reasons or other regulations relating to the storage of said liquid product or the delivery of said liquid product to a destination the system according to the invention comprises in a further variant means to enhance the electromagnetic compatibility of said system and/or means to protect against an electrostatic discharge.

In a further variant of the invention the system according to the invention further comprises one or more protective covers or protective coating for said electrodes and/or said control unit, to prevent a direct contact with said liquid product. Since the stored liquid product can be corrosive or acidly a direct contact between the components of the system according to the invention with the stored liquid product must be avoided. Thus, the components of the system according to the invention are covered by a protective cover or a protective coating. In this case said first electrode, said second electrode and/or said third electrode could also be located on the inner wall of said cavity. This is also possible if the liquid product is not corrosive or acidly.

Preferably said control unit is built to provide a first excitation signal to said first electrode and an inversely phased second excitation signal to said third electrode and to measure an output signal at said second electrode, wherein said output signal at said second electrode is a superposition of said first excitation signal with said second excitation signal. According to a preferred variant of the invention said control unit comprises an operational amplifier, a microprocessor, an analog-to-digital converter and/or a capacitance-to-digital converter, especially to measure said output signal at said second electrode. Furthermore, said control unit comprises or is connected to a signal generator to provide said first excitation signal and/or said second excitation signal to said first electrode and/or third electrode respectively.

According to a further variant of the invention said control unit comprises an interface to a second control unit, a control module, a switch, an alarm and/or a two wire output use by standard programmable logic controllers (PLC), for a further processing of the measured output signal.

In accordance with a further variant of the said invention said control unit is built by using a printed circuit board (PCB), preferably by using a flexible printed circuit board. Using a flexible printed circuit board for example permits an integration of the system according to the invention into said supply, especially an integration into said connector of said supply.

The problem is further solved by a method for monitoring presence or absence of a liquid product in a cavity using a system according to the invention comprising the steps of:
applying a first excitation signal to said first electrode and an inversely phased second excitation signal to said third electrode;
measuring an output signal at said second electrode, wherein said output signal at said second electrode is a superposition of said first excitation signal with said second excitation signal;
wherein a first signal indicating that no liquid product is monitored inside said cavity is provided in case said output signal is below a first threshold; and
wherein a second signal indicating that liquid product is monitored inside said cavity is provided in case said output signal is above a second threshold.

Since the distance between said first electrode and said second electrode along the inner wall of said cavity equals approximately the distance between said third electrode and said second electrode along the inner wall of said cavity the output signal at the second electrode is about zero in case of absence of a liquid product in said cavity. A presence of liquid product in said cavity is monitored because the distance between said first electrode and said second electrode through said cavity is shorter than said distance between said third electrode and said second electrode through said cavity.

According to a variant of the invention said first excitation signal and said inversely faced second excitation signal is an alternating current or a pulsed voltage, preferably a pulsed rectangular voltage. In a preferred variant of the invention the frequency of the alternating current or the pulsed voltage is above 1 MHz, preferably above 5 MHz and further preferably about 10 MHz.

In a variant of the invention said first threshold is less than 20 %, preferably 10 %, of the first excitation voltage and/or said second threshold is greater than 20 %, preferably 30 %, of the first excitation voltage. Preferably said first threshold is 20 % of the first excitation voltage and/or said second threshold is 50 % of the first excitation voltage.

According to a further variant of the invention a third signal indicating that the presence or absence of said liquid product in said cavity could not be monitored is provided in case said output signal is between said first threshold and said second threshold.

In the following the invention will be further explained with respect to the embodiments shown in the figures, wherein:
- Fig. 1: shows a perspective view of a first embodiment of a system according to the invention;
- Fig. 2: shows a cross sectional view of the system from Fig. 1 without a liquid product flowing through the cavity;
- Fig. 3: shows a cross sectional view of the system form Fig. 1 with a liquid product flowing through the cavity;
- Fig. 4: shows a perspective view of a second embodiment of a system according to the invention;
- Fig. 5: shows a cross sectional view of the system from Fig. 4 without a liquid product flowing through the cavity; and
- Fig. 6: shows a cross sectional view of the system from Fig. 4 with a liquid product flowing through the cavity.

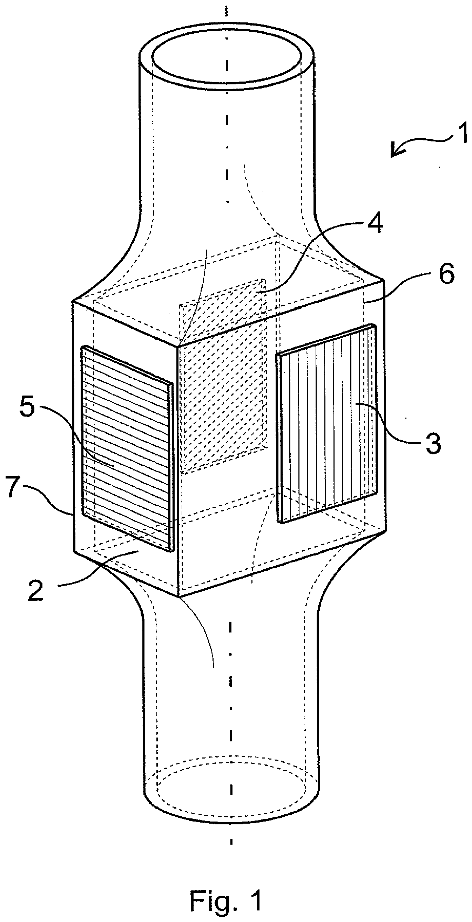

Fig. 1 shows the perspective view of a first embodiment of a system 1 for monitoring presence or absence of a liquid product 11 in a cavity 2. The system 1 comprises a first electrode 3, a second electrode 4 and a third electrode 5 and a control unit (not shown) connected to said electrode 3, 4, 5. The cavity 2 of said system 1 is defined by a wall with an inner wall 6 and an outer wall 7, wherein said first electrodes 3, said second electrode 4 and said third electrode 5 are located on the outer wall 7 of said cavity 2. The distance between said first electrode 3 and said second electrode 4 along the inner wall 6 of said cavity 2 equals approximately the distance between said third electrode 5 and said second electrode 4 along the inner wall 6 of said cavity 2 and the distance between said first electrode 3 and said second electrode 4 through said cavity 2 is shorter than said distance between said third electrode 5 and said second electrode 4 through said cavity 2.

In case no liquid product 11 is located inside said cavity 2 or only the inner wall 6 of said cavity 2 is covered with a liquid product 11 the conductivity and permittivity, also referred to as complex conductivity, between said first electrode 3 and said second electrode 4 mainly depends on the distance between said first electrode 3 and said second electrode 4 along the inner wall 6 of said cavity 2. Accordingly the complex conductivity between said third electrode 5 and said second electrode 4 mainly depends on the distance between said third electrode 5 and said second electrode 4 along the inner wall 6 of said cavity 2. In case the surface area of said first electrode 3 equals to the surface area of said third electrode 5 the complex conductivity between said first electrode 3 and said second electrode 4 approximately equals the complex conductivity between said third electrode 5 and said second electrode 4.

In case liquid product 11 is flowing through said cavity 2 the complex conductivity between said first electrode 3 and said second electrode 4 mainly depends on the distance between said first electrode 3 and said second electrode 4 through said cavity 2. Accordingly the complex conductivity between said third electrode 5 and said second electrode 4 mainly depends on the distance between said third electrode 5 and said second electrode 4 through said cavity 2, in case a liquid product 11 is located inside said cavity 2.

Thus, the system 1 according to the invention can monitor the presence or absence of a liquid product 11 in a cavity 2 by measuring the complex conductivity between said first electrode 3 and said second electrode 4 and comparing result to the measured complex conductivity between said third electrode 5 and said second electrode 4. In case no liquid product 11 is located inside said cavity 2 or only the inner wall 6 of said cavity 2 is covered with the liquid product 11 both complex conductivities have approximately the same value. In case liquid product 11 is located inside said cavity 2 the complex conductivity between said first electrode 3 and said second electrode 4 is significantly different from the complex conductivity between said third electrode 5 and said second electrode 4. The obtained result does not depend on the conductivity and permittivity of the liquid product 11 and since the distance between said first electrode 3 and said second electrode 4 along the inner wall 6 of said cavity 2 equals approximately the distance between said third electrode 5 and said second electrode 4 along the inner wall 6 of said cavity 2 and the distance between said first electrode 3 and said second electrode 4 through said cavity 2 is shorter than said distance between said third electrode 5 and said second electrode 4 through said cavity 2. Thus, the system 1 according to the invention can monitor the presence or absence of a liquid product 11 in a cavity 2 irrespective of the kind of liquid product 11.

The control unit (not shown) is built to provide a first excitation signal 8 to said first electrode 3 and an inversely phased second excitation signal 9 to said third electrode 5. The control unit is preferably built to measure an output signal 10 at said second electrode 4, wherein said output signal 10 at the second electrode 4 is a superposition of said first excitation signal 8 with said second excitation signal 9.

If no liquid product 11 is inside said cavity 2 or only the inner wall 6 of said cavity 2 is covered with said liquid product 11 the complex conductivity between said third electrode 5 and said second electrode 4 and the complex conductivity between said first electrode 3 and said second electrode 4 cancel out each other and the measured output signal 10 at said second electrode 4 is about zero. If liquid product 11 is inside said cavity 2 the complex conductivity between said first electrode 3 and said second electrode 4 is significantly different from the complex conductivity between said third electrode 5 and said second electrode 4 and the measured output signal 10 at the second electrode 4 differs from about zero.

The system 1 according to Fig. 1 can be integrated into a supply, wherein said liquid product 11 is delivered from said supply to a destination. An example of such a situation is where a rinse aid agent or a liquid detergent is delivered from a container to a commercial washer, where the rinse aid agent or liquid detergent is added to the water of the commercial washer.

Preferably said supply comprises a connector located in an outside wall, further preferably the top outside wall of said supply, wherein said system 1 is at least partially integrated in said connector.

As can be seen from Fig. 1 said first electrode 3, said second electrode 4 and said third electrode 5 are radially spaced from each other. The radially spacing between said first electrode 3, said second electrode 4 and said third electrode 5 is dimensioned in such a way that the distance between said first electrode 3 and said second electrode 4 along the inner wall 6 of said cavity 2 is equal to approximately the distance between said third electrode 5 and said second electrode 4 along the inner wall 6 of said cavity 2 and the distance between said first electrode 3 and said second electrode 4 through said cavity 2 is shorter than the distance between said third electrode 5 and said second electrode 4 through said cavity 2.

According to a preferred embodiment of the invention said first electrode 3, said second electrode 4 and said third electrode 5 at least partially consists of copper.

Said cavity 2 of the system 1 according to the invention can be a tubing for delivering the liquid product 11 from a source to a destination or a suction lance for delivering the liquid product 11 from inside the supply, e. g. a container, to an outside tubing which connects the supply to the destination.

The liquid product 11 can be e. g. a rinse aid agent, a detergent, a softener and/or a conditioner. The supply can be a vessel, a container, a barrel, a keg, a drum, a storage-jar or another kind of hollow vessel for storing a liquid product 11.

For safety reasons or other regulation relating to the storage of a specific liquid product 11 or the delivering of said liquid product 11 to a destination said system 1 can comprise means to enhance the electromagnetic compatibility of said system 1 and/or means to protect against an electrostatic discharge.

Since the stored liquid product 11 can be corrosive or acidly a direct contact between the component of the system 1 with the stored liquid product 11 must be avoided. Thus, the component of the system 1 can be covered with a protective cover or a protective coating. In this case said first electrode 3, said second electrode 4 and/or said third electrode 5 could also be located on the inner wall 6 of said cavity 2. This is also possible if the liquid product 11 is not corrosive or acidly.

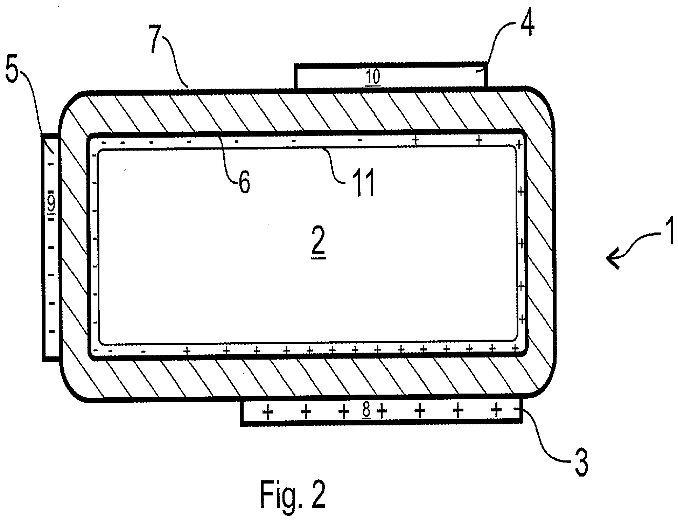

Fig. 2 shows a cross sectional view of the system 1 from Fig. 1 without a liquid product 11 flowing through said cavity 2, but the inner wall 6 of cavity 2 covered with liquid product 11. As can be seen from Fig. 2 said first electrode 3, said second electrode 4 and said third electrode 5 are located on the outer wall 7 of said cavity 2, such that the distance between said first electrode 3 and said second electrode 4 along the inner wall 6 of said cavity 2 equals approximately the distance between said third electrode 5 and said second electrode 4 along the inner wall 6 of said cavity 2 and such that the distance between said first electrode 3 and said second electrode 4 through said cavity 2 is shorter than the distance between said third electrode 5 and said second electrode 4 through said cavity 2.

If the inner wall 6 of said cavity 2 is covered with a liquid product 11, as shown in Fig. 2, the complex conductivity between said first electrode 3 and said second electrode 4 mainly depends on the distance between said first electrode 3 and said second electrode 4 along the inner wall 6 of said cavity 2. Accordingly the complex conductivity between said third electrode 5 and said second electrode 4 mainly depends on the distance between said third electrode 5 and said second electrode 4 along the inner wall 6 of said cavity 2.

The control unit provides a first excitation signal 8 to said first electrode 3, which is illustrated in Fig. 2 by the "+"-symbols on the first electrode 3. Furthermore, the control unit provides an inversely phased second excitation signal 9 to said third electrode 5, which is illustrated in Fig. 2 by the "-"-symbols on the third electrode 5.

The complex conductivity between said first electrode 3 and said second electrode 4 is illustrated in Fig. 2 by the "+"-symbols inside the liquid product 11 on the inner wall 6 of said cavity 2. Accordingly, the complex conductivity between said third electrode 5 and said second electrode 4 is illustrated in Fig. 2 by the "-"-symbols located in the liquid product 11 covering the inner wall 6 of said cavity 2. In this case the complex conductivity between said first electrode 3 and said second electrode 4 approximately equals the complex conductivity between said third electrode 5 and said second electrode 4. Thus, the system 1 according to Fig. 2 can monitor the presence or absence of a liquid product 11 in a cavity 2 measuring the complex conductivity between said first electrode 3 and said second electrode 4 and comparing the result to the measured complex conductivity between said third electrode 5 and said second electrode 4. Since only the inner wall 6 of said cavity 2 is covered with said liquid product 11 the complex conductivity between said third electrode 5 and said second electrode 4 and the complex conductivity between said first electrode 3 and said second electrode 4 cancel out each other.

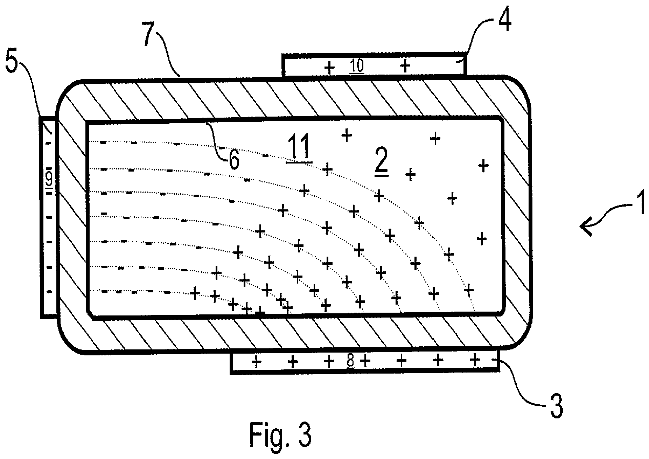

Fig. 3 shows a cross sectional view of the system 1 from Fig. 1 with a liquid product 11 flowing through said cavity 2. In this case a liquid product 11 is located inside said cavity 2 and therefore the complex conductivity between said first electrode 3 and said second electrode 4 is significantly different from the complex conductivity between said third electrode 5 and said second electrode 4. Thus, the measured signal at the second electrode 4 is significantly different from about zero, which is illustrated in Fig. 3 by the "+"-symbols inside said second electrode 4. In Fig. 3 the complex conductivity between said first electrode 3 and said second electrode 4 is illustrated by the "+"-symbols inside the liquid product 11 and the complex conductivity between said third electrode 5 and said second electrode 4 is illustrated by the "-"-symbols inside said liquid product 11.

As can be seen from Fig. 2 and 3 the system 1 according to the invention can monitor the presence or absence of liquid product 11 in a cavity 2 by measuring the complex conductivity between said first electrode 3 and said second electrode 4 and comparing results to the measured complex conductivity between said third electrode 5 and said second electrode 4. The measured output signal 10 at said second electrode 4 is a superposition of said first excitation signal 8 with said second excitation signal 9. Using an inversely phased second excitation signal results in an output signal 10 about zero if no liquid product 11 is inside said cavity 2 or only the inner wall 6 of said cavity 2 is covered with said liquid product 11. When said liquid product 11 is inside said cavity 2 the complex conductivity between said first electrode 3 and sad second electrode 4 is different from the complex conductivity between said third electrode 5 and said second electrode 4 and hence, the measured output signal 10 at said second electrode 4 is significantly different from about zero.

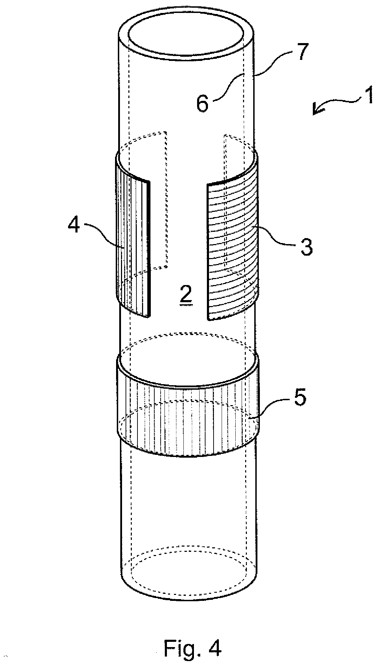

Fig. 4 shows the perspective view of a second embodiment of a system 1 for monitoring presence or absence of a liquid product 11 in a cavity 2. The system 1 comprises a first electrode 3, a second electrode 4 and a third electrode 5 and a control unit (not shown) connected to said electrode 3, 4, 5. The cavity 2 of said system 1 is defined by a wall with an inner wall 6 and an outer wall 7, wherein said first electrode 3, said second electrode 4 and said third electrode 5 are located on the outer wall 7 of said cavity 2.

Said first electrode 3, said second electrode 4 and said third electrode 5 are radially and longitudinally spaced from each other such that the distance between said first electrode 3 and said second electrode 4 along the inner wall 6 of said cavity 2 equals approximately the distance between said third electrode 5 and said second electrode 4 along the inner wall 6 of said cavity 2 and such that the distance between said first electrode 3 and said second electrode 4 through said cavity 2 is shorter than the distance between said third electrode 5 and said second electrode 4 through said cavity 2.

Said control unit is built to provide a first excitation signal 8 to said first electrode 3 and an inversely phased second excitation signal 9 to the third electrode 5. Furthermore said control unit is built to measure an output signal 10 at said second electrode 4, wherein said output signal 10 at said second electrode 4 is a superposition of said first excitation signal 8 with said second excitation signal 9.

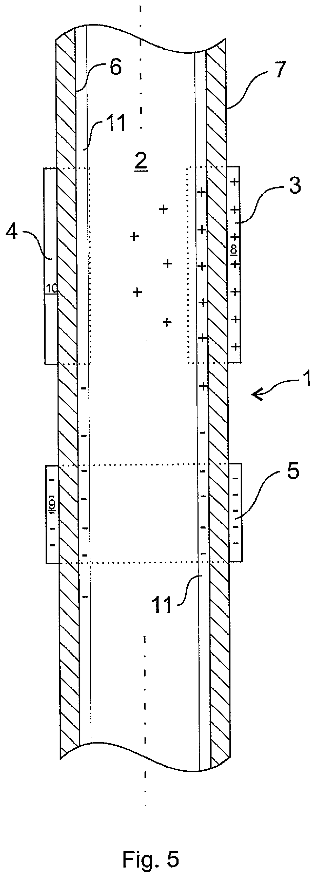

Fig. 5 shows a cross sectional view of the system 1 from Fig. 4 without liquid product 11 flowing trough said cavity 2, but with a liquid product 11 covering the inner wall 6 of said cavity 2. According to Fig. 5 the control unit provides a first excitation signal 8 to said first electrode 3, illustrated by the "+"-symbols inside said first electrode 3. Furthermore, the control unit provides a second excitation signal 9 to said third electrode 5, illustrated by the "-"-symbols inside said third electrode 5. Since the second excitation signal 9 is inversely phased to the first excitation signal 8 the measured output signal 10 at said second electrode 4, which is a superposition of said first excitation signal 8 with said second excitation signal 9, is about zero.

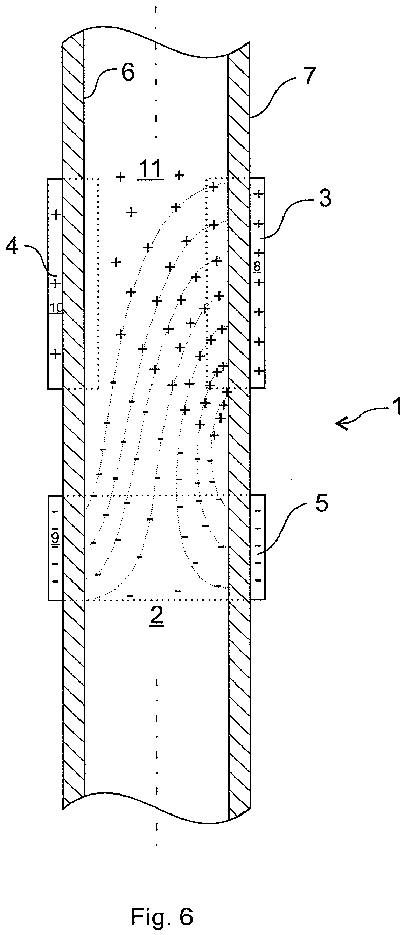

Fig. 6 shows a cross section view of said system 1 from Fig. 4 with a liquid product 11 flowing through said cavity 2. The complex conductivity between said first electrode 3 and said second electrode 4 is illustrated by the "+"-symbols inside the liquid product 11 and the complex conductivity between said third electrode 5 and said second electrode 4 is illustrated in Fig. 6 by the "-"-symbols inside the liquid product 11.

Since the output signal 10 at said second electrode 4 is a superposition of said first excitation signal 8 with said second excitation signal 9 the measured output signal 10 at said second electrode 4 is different from about zero, which is illustrated in Fig. 6 by the "+"-symbols inside said second electrode 4.

As can be seen from the embodiments according to Fig. 1 and 4 the invention is not limited to a specific geometry of said cavity 2, e. g. circular or rectangular, but only on the location of said first electrode 3, said second electrode 4 and said third electrode 5. According to the invention the distance between said first electrode 3 and said second electrode 4 along the inner wall 6 of said cavity 2 equals approximately the distance between said third electrode 5 and said second electrode 4 along the inner wall 6 of said cavity 2 and the distance between said first electrode 3 and said second electrode 4 through said cavity 2 is shorter than said distance between said third electrode 5 and said second electrode 4 through said cavity 2.

A method for monitoring presence or absence of a liquid product 11 in a cavity 2 using a system 1 according to Fig. 1 or 4 comprises the steps of:
- applying a first excitation signal 8 to said first electrode 3 and an inversely phased second excitation signal 9 to said third electrode 5;
- measuring an output signal 10 at said second electrode 4, wherein said output signal 10 at said second electrode 4 is a superposition of said first excitation signal 8 with said second excitation signal 9;
wherein a first signal indicating that no liquid product 11 is monitored inside said cavity 2 is provided in case said output signal 10 is below a first threshold; and
wherein a second signal indicating that liquid product 11 is monitored inside the cavity 2 is provided in case said output signal 10 is about a second threshold.

Preferably said first excitation signal 8 and said inversely phased second excitation signal 9 are an alternating current or a pulsed voltage, preferably a pulsed rectangular voltage. According to a further embodiment of the method said first threshold is less than 20 % preferably 10 % of the first excitation signal 8 and/or said second threshold is greater 20 %, preferably 30 %, of said first excitation signal 8. According to a further embodiment of the method said first threshold is 20 % of said first excitation signal 8 and said second threshold is 50 % of said first excitation signal 8. In such an embodiment a third signal indicating that the presence or absence of a liquid product 1 1 inside said cavity 2 could not be monitored is provided in case said output signal 10 is between said first threshold and said second threshold.

## Claims

1. A system (1) for monitoring presence or absence of a liquid product (11) in a cavity (2), wherein said liquid product (11) preferably is a rinse aid agent, a detergent, a softener and/or a conditioner and wherein said cavity (2) preferably is a tubing, further preferred a suction lance;
said system comprises:
at least a first electrode (3), a second electrode (4) and a third electrode (5) a control unit connected to said electrodes (3, 4, 5); and
means for measuring the complex conductivity between said first electrode (3) and said second electrode (4) and comparing the result to the measured complex conductivity between said third electrode and said second electrode;
wherein said cavity (2) is defined by a wall with an inner wall (6) and an outer wall (7);
wherein said first electrode (3), said second electrode (4) and said third electrode (5) are located on the outer wall (7) or on the inner wall (6) of said cavity (2);
wherein
the distance between said first electrode (3) and said second electrode (4) along the inner wall (6) of said cavity (2) equals the distance between said third electrode (5) and said second electrode (4) along the inner wall (6) of said cavity (2); and
the distance between said first electrode (3) and said second electrode (4) through said cavity (2) is shorter than said distance between said third electrode (5) and said second electrode (4) through said cavity (2);
**characterized in that**,
said first electrode (3), said second electrode (4) and/or said third electrode (5) are radially or radially and longitudinally spaced from each other.

2. System (1) according to claim 1,
wherein said control unit is built to provide a first excitation signal (8) to said first electrode (3) and an inversely phased second excitation signal (9) to said third electrode (5).

3. System (1) according to claim 2,
wherein said control unit is built to measure an output signal (10) at said second electrode, wherein said output signal (10) at said second electrode (4) is a superposition of said first excitation signal (8) with said second excitation signal (9).

4. System (1) according to any of claims 1 to 3,
wherein said system (1) is integrated in a supply, wherein said liquid product (11) is delivered from that supply to a destination, and optionally
wherein said supply comprises a connector located in an outside wall, preferably the top outside wall of said supply, and wherein said system (1) is at least partially integrated in said connector; and/or
wherein said supply is a vessel, a container, a barrel, a keg, a drum, a storage-jar or another kind of hollow vessel for storing a liquid product (11).

5. System (1) according to any of claims 1 to 4,
further comprising means to protect against an electrostatic discharge.

6. System (1) according to any of claims 1 to 5, further comprising one or more protective covers or protective coatings for said electrodes (3, 4, 5) and/or said control unit, to prevent a direct contact with said liquid product (11) if said first electrode (3), said second electrode (4) and said third electrode (5) are located on the inner wall (6) of said cavity.

7. System (1) according to any of claims 1 to 6,
wherein said control unit comprises an operational amplifier, a microprocessor, an Analog-to-Digital converter and/or a Capacitance-to-Digital converter.

8. System (1) according to any of claims 1 to 7,
wherein said control unit comprises an interface to a second control unit, a control module, a switch, an alarm and/or a two wire output used by standard programmable logic controllers (PLC).

9. System (1) according to any of claims 1 to 8,
wherein said control unit is built by using a printed circuit board (PCB), preferably by using a flexible printed circuit board.

10. A method for monitoring presence or absence of a liquid product (11) in a cavity (2) using a system (1) according to any of claims 1 to 9 comprising the steps of:
- applying a first excitation signal (8) to said first electrode (3) and an inversely phased second excitation signal (9) to said third electrode (5);
- measuring an output signal (10) at said second electrode (4), wherein said output signal (10) at said second electrode (4) is a superposition of said first excitation signal (8) with said second excitation signal (9);
- wherein a first signal indicating that no liquid product (11) is monitored inside said cavity (2) is provided in case said output signal (10) is below a first threshold; and
- wherein a second signal indicating that liquid product (11) is monitored inside said cavity (2) is provided in case said output signal (10) is above a second threshold.

11. Method according to claim 10,
wherein said first excitation signal and said inversely phased second excitation signal is an alternating current or a pulsed voltage, preferably a pulsed rectangular voltage.

12. Method according to claim 10 or claim 11,
wherein said first threshold is less that 20 % preferably 10 %, of the first excitation signal (8) and/or said second threshold is greater 20 %, preferably 30 %, of the first excitation signal (8).

13. Method according to claim 10 or claim 11,
wherein said first threshold is 20 % of the first excitation signal (8) and/or said second threshold is 50 % of the first excitation signal (8).

14. Method according to any of claims 11 to 13,
wherein a third signal indicating that the presence or absence of said liquid product (11) in said cavity (2) could not be monitored is provided in case said output signal (10) is between said first threshold and said second threshold.

## Patentansprüche

1. System (1) zum Überwachen auf Vorhandensein oder Fehlen eines flüssigen Produkts (11) in einem Hohlraum (2), wobei es sich bei dem flüssigen Produkt (11) vorzugsweise um einen Klarspüler, ein Reinigungsmittel, einen Enthärter und/oder einen Weichspüler handelt und wobei der Hohlraum (2) vorzugsweise ein Rohr ist, stärker bevorzugt eine Sauglanze; wobei das System Folgendes umfasst:
mindestens eine erste Elektrode (3), eine zweite Elektrode (4) und eine dritte Elektrode (5), eine mit den Elektroden (3, 4, 5) verbundene Steuereinheit; und
Mittel zum Messen der komplexen Leitfähigkeit zwischen der ersten Elektrode (3) und der zweiten Elektrode (4) und zum Vergleichen des Ergebnisses mit der gemessenen komplexen Leitfähigkeit zwischen der dritten Elektrode und der zweiten Elektrode;
wobei der Hohlraum (2) durch eine Wand mit einer Innenwandung (6) und einer Außenwandung (7) begrenzt wird;
wobei die erste Elektrode (3), die zweite Elektrode (4) und die dritte Elektrode (5) an der Außenwandung (7) oder an der Innenwandung (6) des Hohlraums (2) angeordnet sind;
wobei der Abstand von der ersten Elektrode (3) zu der zweiten Elektrode (4) entlang der Innenwandung (6) des Hohlraums (2) gleich groß ist wie der Abstand von der dritten Elektrode (5) zu der zweiten Elektrode (4) entlang der Innenwandung (6) des Hohlraums (2); und
der Abstand von der ersten Elektrode (3) zu der zweiten Elektrode (4) über den Hohlraum (2) hinweg kürzer ist als der Abstand von der dritten Elektrode (5) zu der zweiten Elektrode (4) über den Hohlraum (2) hinweg;
**dadurch gekennzeichnet, dass**
die erste Elektrode (3), die zweite Elektrode (4) und/oder die dritte Elektrode (5) radial oder
radial und in Längsrichtung voneinander beabstandet sind.

2. System (1) nach Anspruch 1,
wobei die Steuereinheit so gefertigt ist, dass sie an der ersten Elektrode (3) ein erstes Erregungssignal (8) und an der dritten Elektrode (5) ein gegenphasiges zweites Erregungssignal (9) anlegt.

3. System (1) nach Anspruch 2,
wobei die Steuereinheit zum Messen eines Ausgangssignals (10) an der zweiten Elektrode gefertigt ist, wobei das Ausgangssignal (10) an der zweiten Elektrode (4) eine Superposition des ersten Erregungssignals (8) und des zweiten Erregungssignals (9) ist.

4. System (1) nach einem der Ansprüche 1 bis 3,
wobei das System (1) in eine Bevorratung eingebaut ist, wobei das flüssige Produkt (11) von dieser Bevorratung einem Bestimmungsort zugeführt wird, und optional
wobei die Bevorratung einen in einer Außenwand, vorzugsweise der oberen Außenwand, der Bevorratung angeordneten Verbinder umfasst, und wobei das System (1) zumindest teilweise in den Verbinder eingebaut ist; und/oder
wobei die Bevorratung ein Gefäß, ein Behälter, eine Tonne, ein Fass, eine Trommel, ein Aufbewahrungsglas oder eine andere Art von Hohlgefäß zum Aufbewahren eines flüssigen Produkts (11) ist.

5. System (1) nach einem der Ansprüche 1 bis 4,
das ferner Mittel zum Schützen vor elektrostatischer Entladung umfasst.

6. System (1) nach einem der Ansprüche 1 bis 5,
ferner eine oder mehrere Schutzabdeckungen oder Schutzbeschichtungen für die Elektroden (3, 4, 5) und/oder die Steuereinheit umfassend, um einen direkten Kontakt mit dem flüssigen Produkt (11) zu verhindern, wenn die erste Elektrode (3), die zweite Elektrode (4) und die dritte Elektrode (5) an der Innenwandung (6) des Hohlraums angeordnet sind.

7. System (1) nach einem der Ansprüche 1 bis 6,
wobei die Steuereinheit einen Operationsverstärker, einen Mikroprozessor, einen Analog-Digital-Wandler und/oder einen Kapazitäts-Digital-Wandler umfasst.

8. System (1) nach einem der Ansprüche 1 bis 7,
wobei die Steuereinheit eine Schnittstelle zu einer zweiten Steuereinheit, ein Steuermodul, einen Schalter, einen Alarm und/oder einen Zwei-Draht-Ausgang umfasst, die von einer standardmäßigen speicherprogrammierbaren Steuerung (SPS) verwendet werden.

9. System (1) nach einem der Ansprüche 1 bis 8,
wobei die Steuereinheit unter Verwendung einer Leiterplatte (PCB), vorzugsweise unter Verwendung einer flexiblen Leiterplatte, gefertigt ist.

10. Verfahren zum Überwachen auf Vorhandensein oder Fehlen eines flüssigen Produkts (11) in einem Hohlraum (2) unter Verwendung eines Systems (1) nach einem der Ansprüche 1 bis 9, die folgenden Schritte umfassend:
- Anlegen eines ersten Erregungssignals (8) an der ersten Elektrode (3) und eines gegenphasigen zweiten Erregungssignals (9) an der dritten Elektrode (5);
- Messen eines Ausgangssignals (10) an der zweiten Elektrode (4), wobei das Ausgangssignal (10) an der zweiten Elektrode (4) eine Superposition des ersten Erregungssignals (8) und des zweiten Erregungssignals (9) ist;
- wobei ein erstes Signal, das anzeigt, dass kein flüssiges Produkt (11) innerhalb des Hohlraums (2) festgestellt wird, bereitgestellt wird, falls das Ausgangssignal (10) unter einem ersten Schwellwert liegt; und
- wobei ein zweites Signal, das anzeigt, dass ein flüssiges Produkt (11) innerhalb des Hohlraums (2) festgestellt wird, bereitgestellt wird, falls das Ausgangssignal (10) über einem zweiten Schwellwert liegt.

11. Verfahren nach Anspruch 10,
wobei das erste Erregungssignal und das gegenphasige zweite Erregungssignal ein Wechselstrom oder eine gepulste Spannung, vorzugsweise eine gepulste Rechteckspannung, sind.

12. Verfahren nach Anspruch 10 oder Anspruch 11,
wobei der erste Schwellwert kleiner als 20 %, vorzugsweise 10 %, des ersten Erregungssignals (8) und/oder der zweite Schwellwert größer als 20 %, vorzugsweise 30 %, des ersten Erregungssignals (8) ist.

13. Verfahren nach Anspruch 10 oder Anspruch 11,
wobei der erste Schwellwert 20 % des ersten Erregungssignals (8) und/oder der zweite Schwellwert 50 % des ersten Erregungssignals (8) ist.

14. Verfahren nach einem der Ansprüche 11 bis 13,
wobei ein drittes Signal, das anzeigt, dass nicht auf Anwesenheit oder Abwesenheit des flüssigen Produkts (11) in dem Hohlraum (2) überwacht werden konnte, bereitgestellt wird, falls das Ausgangssignal (10) zwischen dem ersten Schwellwert und dem zweiten Schwellwert liegt.

## Revendications

1. Système (1) de surveillance de la présence ou de l'absence d'un produit liquide (11) dans une cavité (2), dans lequel ledit produit liquide (11) est de préférence un agent de rinçage, un détergent, un adoucissant et/ou un conditionneur, et dans lequel ladite cavité (2) est de préférence un tube, ou mieux encore une lance d'aspiration ;
ledit système comprend :
au moins une première électrode (3), une deuxième électrode (4) et une troisième électrode (5)
une unité de commande reliée auxdites électrodes (3, 4, 5) ; et
un moyen servant à mesurer la conductivité complexe entre ladite première électrode (3) et ladite deuxième électrode (4), et
la comparaison du résultat avec la conductivité complexe mesurée entre ladite troisième électrode et ladite deuxième électrode ;
dans lequel ladite cavité (2) est définie par une paroi comportant une paroi intérieure (6) et une paroi extérieure (7) ;
dans lequel ladite première électrode (3), ladite deuxième électrode (4) et ladite troisième électrode (5) se trouvent sur la paroi extérieure (7) ou sur la paroi intérieure (6) de ladite cavité (2) ;
dans lequel
la distance entre ladite première électrode (3) et ladite deuxième électrode (4) le long de la paroi intérieure (6) de ladite cavité (2) est égale à la distance entre ladite troisième électrode (5) et ladite deuxième électrode (4) le long de la paroi intérieure (6) de ladite cavité (2) ; et
la distance entre ladite première électrode (3) et ladite deuxième électrode (4) à travers ladite cavité (2) est plus courte que ladite distance entre ladite troisième électrode (5) et ladite deuxième électrode (4) à travers ladite cavité (2) ; **caractérisé en ce que**,
ladite première électrode (3), ladite deuxième électrode (4) et/ou ladite troisième électrode (5) sont espacées radialement ou radialement et longitudinalement les unes des autres.

2. Système (1) selon la revendication 1,
dans lequel ladite unité de commande est construite pour fournir un premier signal d'excitation (8) à ladite première électrode (3) et un deuxième signal d'excitation (9) en phase inverse à ladite troisième électrode (5).

3. Système (1) selon la revendication 2,
dans lequel ladite unité de commande est construite pour mesurer un signal de sortie (10) au niveau de ladite deuxième électrode, dans lequel ledit signal de sortie (10) au niveau de ladite deuxième électrode (4) est une superposition dudit premier signal d'excitation (8) avec ledit deuxième signal d'excitation (9).

4. Système (1) selon l'une quelconque des revendications 1 à 3,
dans lequel ledit système (1) est intégré dans une alimentation, dans lequel ledit produit liquide (11) est livré à partir de cette alimentation vers une destination, et éventuellement
dans lequel ladite alimentation comprend un connecteur se trouvant dans une paroi extérieure, de préférence dans la paroi extérieure supérieure de ladite alimentation, et dans lequel ledit système (1) est au moins partiellement intégré dans ledit connecteur ; et/ou
dans lequel ladite alimentation est un récipient, un conteneur, un baril, un tonneau, un tambour, une jarre de stockage ou un autre type de récipient creux servant à stocker un produit liquide (11).

5. Système (1) selon l'une quelconque des revendications 1 à 4,
comprenant en outre un moyen de protection contre une décharge électrostatique.

6. Système (1) selon l'une quelconque des revendications 1 à 5, comprenant en outre un ou plusieurs couvercles ou revêtements de protection pour lesdites électrodes (3, 4, 5) et/ou
ladite unité de commande, afin d'empêcher un contact direct avec ledit produit liquide (11) si ladite première électrode (3), ladite deuxième électrode (4) et ladite troisième électrode (5) se trouvent sur la paroi intérieure (6) de ladite cavité.

7. Système (1) selon l'une quelconque des revendications 1 à 6,
dans lequel ladite unité de commande comprend un amplificateur opérationnel, un microprocesseur, un convertisseur analogique-numérique et/ou un convertisseur capacité-numérique.

8. Système (1) selon l'une quelconque des revendications 1 à 7,
dans lequel ladite unité de commande comprend une interface comportant une seconde unité de commande, un module de commande, un commutateur, une alarme et/ou une sortie à deux fils utilisée par des automates programmables industriels (PLC) standard.

9. Système (1) selon l'une quelconque des revendications 1 à 8,
dans lequel ladite unité de commande est construite par l'utilisation d'une carte de circuit imprimé (PCB),
de préférence par l'utilisation d'un circuit imprimé flexible.

10. Procédé de surveillance de la présence ou de l'absence d'un produit liquide (11) dans une cavité (2) à l'aide d'un système (1) selon l'une quelconque des revendications 1 à 9, comprenant les étapes :
- d'application d'un premier signal d'excitation (8) sur ladite première électrode (3) et d'un deuxième signal d'excitation (9) en phase inverse sur ladite troisième électrode (5) ;
- de mesure d'un signal de sortie (10) au niveau de ladite deuxième électrode (4), ledit signal de sortie (10) au niveau de ladite deuxième électrode (4) étant une superposition dudit premier signal d'excitation (8) avec ledit deuxième signal d'excitation (9) ;
- un premier signal indiquant qu'aucun produit liquide (11) n'est surveillé à l'intérieur de ladite cavité (2) étant apporté si ledit signal de sortie (10) est inférieur à un premier seuil ; et
- un deuxième signal indiquant que le produit liquide (11) est surveillé à l'intérieur de ladite cavité (2) étant apporté si ledit signal de sortie (10) est supérieur à un second seuil.

11. Procédé selon la revendication 10,
dans lequel ledit premier signal d'excitation et ledit deuxième signal d'excitation en phase inverse sont un courant alternatif ou une tension puisée, de préférence une tension rectangulaire pulsée.

12. Procédé selon la revendication 10 ou 11,
dans lequel ledit premier seuil est inférieur à 20 %, de préférence à 10 %, du premier signal d'excitation (8) et/ou ledit second seuil est supérieur à 20 %, de préférence à 30 %, du premier signal d'excitation (8).

13. Procédé selon la revendication 10 ou 11,
dans lequel ledit premier seuil représente 20 % du premier signal d'excitation (8) et/ou ledit second seuil représente 50 % du premier signal d'excitation (8).

14. Procédé selon l'une quelconque des revendications 11 à 13,
dans lequel un troisième signal indiquant que la présence ou l'absence dudit produit liquide (11) dans ladite cavité (2) ne pouvait pas être surveillée est fourni si ledit signal de sortie (10) se trouve entre ledit premier seuil et ledit second seuil.
